# FASCICULE DE BREVET EUROPEEN

(11) **EP 3 861 296 B1**
(45) Date de publication et mention de la délivrance du brevet: **05.10.2022**
(21) Numéro de dépôt: 19780034.5
(22) Date de dépôt: 30.09.2019
(51) Int. Cl.: G01D 11/30

(54) **DISPOSITIF DE FIXATION POUR LA TENUE D'UN CAPTEUR, COMPRENANT UNE CAME**
BEFESTIGUNGSVORRRICHTUNG ZUM HALTEN EINES SENSORS, MIT EINEM NOCKEN
FASTENING DEVICE FOR HOLDING A SENSOR, COMPRISING A CAM

(30) Priorité: 05.10.2018 FR 1859227
(43) Date de publication de la demande: 11.08.2021
(73) Titulaire: Payraud, Pierre, 74300 Thyez (FR)
(72) Inventeur: Payraud, Pierre, 74300 Thyez (FR)
(74) Mandataire: Cabinet Poncet
(86) Numéro de dépôt international: PCT/IB2019/058281
(87) Numéro de publication internationale: WO 2020/070615

(56) Documents cités:
- EP-A1- 1 605 235
- DE-A1-102008 050 902
- FR-A1- 2 686 690
- FR-A1- 3 055 963

## Description

### DOMAINE TECHNIQUE DE L'INVENTION

La présente invention concerne le domaine des capteurs, et concerne plus particulièrement un dispositif de fixation pour la tenue d'un capteur.

On connaît des capteurs de proximité ayant une forme cylindrique limitée par une extrémité proximale et une extrémité distale. Ces capteurs peuvent être capacitifs, inductifs, optoélectroniques ou à fibre optique par exemple, et ont le plus souvent une section transversale circulaire. De tels capteurs sont par exemple utilisés dans une machine-outils ou sur une chaîne automatisée de fabrication pour détecter la présence d'un objet et/ou mesurer la distance à laquelle se trouve l'objet. Ces capteurs sont amovibles et interchangeables, et leur position doit pouvoir être réglée et figée.

Pour tenir l'un de ces capteurs dans une position fixe et réglable par rapport à leur environnement, on connaît des dispositifs de fixation, comportant :
- un corps comprenant un passage longitudinal traversant s'allongeant selon un premier axe longitudinal entre une première extrémité et une deuxième extrémité, ledit passage longitudinal traversant étant destiné à recevoir ledit capteur,
- des moyens d'immobilisation axiale du capteur dans le passage longitudinal traversant.

FR2686690 divulgue un tel dispositif de fixation.

Les moyens d'immobilisation axiale nécessitent généralement pour leur actionnement un espace libre bien dégagé autour du dispositif de fixation (par exemple pour l'utilisation d'une clef plate). Cela présente un inconvénient lorsque le dispositif de fixation est installé dans un endroit peu accessible, voire confiné, comme c'est souvent le cas dans une machine-outils ou sur une chaîne automatisée de fabrication.

### EXPOSE DE L'INVENTION

Un problème proposé par la présente invention est de fournir un dispositif de fixation dans lequel les moyens d'immobilisation axiale peuvent être rapidement et facilement actionnés, même dans un environnement où on dispose de peu d'espace radialement autour du dispositif de fixation.

Simultanément, la présente invention vise à fournir un dispositif de fixation comportant des moyens d'immobilisation axiale permettant d'immobiliser un capteur de façon simple, rapide et fiable.

Pour atteindre ces objets ainsi que d'autres, l'invention propose un dispositif de fixation pour la tenue d'un capteur ayant une forme cylindrique limitée par une extrémité proximale et une extrémité distale, le dispositif de fixation comportant :
- un corps comprenant un passage longitudinal traversant s'allongeant selon un premier axe longitudinal entre une première extrémité et une deuxième extrémité, ledit passage longitudinal traversant étant destiné à recevoir ledit capteur,
- des moyens d'immobilisation axiale du capteur dans le passage longitudinal traversant ;
selon l'invention, les moyens d'immobilisation axiale comprennent :
- un flasque, solidaire du corps, s'épanouissant radialement depuis et à l'écart du corps et du premier axe longitudinal,
- une came montée rotative sur le flasque autour d'un deuxième axe longitudinal parallèle au premier axe longitudinal et décalé radialement à l'écart du premier axe longitudinal,
- des moyens d'entraînement en rotation de la came autour du deuxième axe longitudinal, accessibles de préférence selon une face frontale d'extrémité de la came, ladite face frontale d'extrémité étant sensiblement perpendiculaire au premier axe longitudinal,
- une pièce de serrage, fixe selon le premier axe longitudinal par rapport au corps, comportant une surface de serrage destinée à venir au contact de la surface extérieure du capteur, sollicitée par la came pour être déplaçable radialement entre au moins :
   o une position de serrage dans laquelle la surface de serrage est distante du premier axe longitudinal selon une première distance,
   ∘ une position de libération dans laquelle la surface de serrage est distante du premier axe longitudinal selon une deuxième distance, la deuxième distance étant supérieure à la première distance.

L'utilisation d'une came est simple et intuitive pour tout opérateur. La came peut être entraînée en rotation autour du deuxième axe longitudinal par des moyens (tels qu'un tournevis) agissant de préférence sur une face frontale d'extrémité de la came (ladite face frontale d'extrémité étant sensiblement perpendiculaire au premier axe longitudinal), lesdits moyens présentant ainsi un faible encombrement radial. La position de serrage est atteinte en moins d'un demi tour de la came autour du deuxième axe longitudinal, ce qui permet une immobilisation rapide.

De préférence, le corps peut comporter un filetage intérieur sur au moins une partie de sa longueur et/ou la surface de serrage comporte un filetage destiné à coopérer avec un filetage extérieur prévu sur la surface extérieure du capteur.

Le capteur peut ainsi être vissé dans le passage longitudinal du corps puis, une fois parvenu à la position longitudinale souhaitée, être retenu par les moyens d'immobilisation empêchant toute rotation supplémentaire ou inverse qui affecterait son positionnement longitudinal. La coopération par vissage entre le capteur et le corps permet un positionnement progressif et précis selon le premier axe longitudinal.

Avantageusement, les moyens d'entraînement en rotation de la came peuvent comprendre, sur la came, une empreinte mâle ou femelle à section transversale non circulaire, ladite empreinte s'étendant parallèlement au premier axe longitudinal. De préférence, ladite empreinte est accessible selon une face frontale d'extrémité de la came, ladite face frontale d'extrémité étant sensiblement perpendiculaire au premier axe longitudinal.

De préférence, à la deuxième extrémité du corps, un épanouissement peut s'étendre radialement vers l'intérieur et définir un orifice à section transversale de dimensions inférieures aux dimensions de la section transversale du capteur.

L'épanouissement radial peut se présenter sous la forme d'une couronne annulaire ou sous la forme d'une ou plusieurs languettes se développant radialement en direction du premier axe longitudinal. L'épanouissement radial constitue une butée limitant la pénétration du capteur dans le corps selon le premier axe longitudinal pour conserver l'extrémité distale de celui-ci bien protégée à l'intérieur du corps. On limite ainsi les risques de dégradation de l'extrémité distale du capteur.

Avantageusement, la came peut être un pion à excentrique comportant :
- un premier tronçon cylindrique à section transversale circulaire s'étendant selon un troisième axe longitudinal, destiné à être reçu rotativement dans un trou ménagé dans le flasque selon le deuxième axe longitudinal,
- un deuxième tronçon cylindrique à section transversale circulaire s'étendant selon un quatrième axe longitudinal décalé radialement à l'écart du troisième axe longitudinal, ledit deuxième tronçon cylindrique étant muni d'une surface latérale destinée à venir en appui contre la pièce de serrage pour solliciter la pièce de serrage en déplacement depuis une position de libération vers une position de serrage.

Le pion à excentrique a ainsi une forme simple à fabriquer.

Avantageusement, la surface latérale cylindrique du deuxième tronçon cylindrique peut être munie de reliefs, les reliefs étant de préférence constitués par un moletage.

Les reliefs, tels que ceux d'un moletage, procurent une meilleure immobilisation en rotation du pion à excentrique par un contact plus rugueux avec la pièce de serrage. Ceci s'avère tout particulièrement utile lorsque le dispositif de fixation est disposé dans un environnement sujet aux vibrations.

Selon un premier mode de réalisation de l'invention, la pièce de serrage peut être formée d'une seule pièce avec le flasque. On limite ainsi les risques de perte de la pièce de serrage.

Dans un tel mode de réalisation, on peut prévoir que :
- la pièce de serrage comprend un bras comportant la surface de serrage,
- ledit bras est relié au flasque par une entretoise qui tient le bras à l'écart du flasque selon le premier axe longitudinal,
- ledit bras est apte à pivoter dans un plan transversal par déformation élastique d'au moins une partie du bras et/ou de l'entretoise.

Au repos, la pièce de serrage est dans une position de libération stable dans laquelle elle est immobile par rapport au flasque. L'opérateur est ainsi certain, dès lors que le pion à excentrique ne contraint pas (plus) le bras, qu'il peut engager le capteur dans le passage longitudinal sans gêne et au moyen d'une seule main (il n'a pas besoin d'utiliser son autre main pour maintenir la pièce de serrage en position de libération, ce qui est important dans les endroits peu accessibles).

Avantageusement, le bras peut retenir captive, selon le deuxième axe longitudinal II-II, la came montée rotative dans un trou du flasque.

Selon un deuxième mode de réalisation de l'invention, la pièce de serrage peut être constituée d'une pièce distincte du flasque.

Dans un tel mode de réalisation, on peut prévoir que, en position de libération, la came immobilise la pièce de serrage par rapport au flasque. Là encore, cela procure à la pièce de serrage une position de libération stable : l'opérateur est ainsi certain, dès lors que la came immobilise la pièce de serrage par rapport au flasque, qu'il peut engager le capteur dans le passage longitudinal sans gêne et au moyen d'une seule main (il n'a pas besoin d'utiliser son autre main pour maintenir la pièce de serrage en position de libération, ce qui est important dans les endroits peu accessibles).

De préférence, on peut prévoir que :
- la pièce de serrage comporte un passage traversant constitué par un premier tronçon de passage traversant prolongé par un deuxième tronçon de passage traversant, le premier tronçon de passage traversant présentant une section transversale de dimensions plus réduites que celles du deuxième tronçon de passage traversant,
- le premier tronçon de passage traversant a une section transversale circulaire de diamètre supérieur au diamètre de la section transversale du premier tronçon cylindrique du pion à excentrique,
- le deuxième tronçon de passage traversant a une section transversale circulaire complémentaire de la forme de la section transversale du deuxième tronçon cylindrique du pion à excentrique.

La pièce de serrage présente ainsi une forme simple et peu onéreuse à fabriquer.

Avantageusement, le décalage radial entre le quatrième axe longitudinal et le troisième axe longitudinal peut être supérieur à la différence entre le diamètre du premier tronçon de passage traversant de la pièce de serrage et le diamètre du premier tronçon cylindrique du pion à excentrique.

Un tel dimensionnement permet de facilement et simplement immobiliser la pièce de serrage par rapport au flasque en position de libération au moyen du pion à excentrique.

De préférence, le corps peut comporter un tronçon tubulaire ayant un filetage extérieur sur au moins une partie de sa longueur. Le corps peut ainsi être monté facilement par vissage dans un support, ou être monté facilement à travers un support puis fixé au moyen d'un écrou et d'un contre-écrou.

Dans une variante, on peut prévoir que :
- le flasque est solidaire du corps en étant monté rotatif par rapport au corps autour du premier axe longitudinal,
- le corps comporte un tronçon d'entraînement à section transversale non circulaire.

Le corps peut ainsi être entraîné en rotation pour être fixé dans un support ou retiré d'un support, tout en conservant une orientation fixe du flasque par rapport audit support. Cela permet de positionner, retirer ou repositionner le dispositif de fixation sur un support sans avoir à retirer préalablement le capteur qu'il contient, tout en limitant les risques de torsion sur le fil auquel le capteur est relié, pour ne pas l'endommager.

Dans une autre variante, le corps et le flasque peuvent être formés d'une seule pièce selon un ensemble à forme sensiblement parallélépipédique.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un premier mode de réalisation de dispositif de fixation selon l'invention ;
- la figure 2 est une vue en coupe longitudinale du dispositif de fixation de la figure 1, la pièce de serrage étant disposée en position de libération ;
- la figure 3 est une vue de côté d'une came utilisée dans le dispositif de fixation de la figure 1 ;
- la figure 4 est une vue en coupe longitudinale du dispositif de fixation de la figure 1, avec un capteur disposé dans le corps, la pièce de serrage étant disposée en position de serrage ;
- la figure 5 est une vue en perspective illustrant un mode particulier d'attachement du dispositif de fixation de la figure 1 sur un support ;
- la figure 6 est une vue en perspective illustrant un autre mode particulier d'attachement du dispositif de fixation de la figure 1 sur un support ;
- la figure 7 est une vue en perspective d'une variante du premier mode de réalisation illustré sur la figure 1 ;
- la figure 8 est une vue en coupe longitudinale d'une autre variante du premier mode de réalisation illustré sur la figure 1 ;
- la figure 9 est une vue en perspective en éclaté d'un deuxième mode de réalisation de dispositif de fixation selon l'invention, avec un capteur ;
- la figure 10 est une vue en perspective du dispositif de fixation de la figure 9 à l'état assemblé, avec un capteur ;
- la figure 11 est une vue de détail en coupe du dispositif de fixation de la figure 10, avec la pièce de serrage en position de libération ;
- la figure 12 est une vue de détail en coupe du dispositif de fixation de la figure 10, avec la pièce de serrage en position de serrage ; et
- la figure 13 est une vue en perspective d'une autre variante du premier mode de réalisation illustré sur la figure 1.

### DESCRIPTION DES MODES DE REALISATION PREFERES

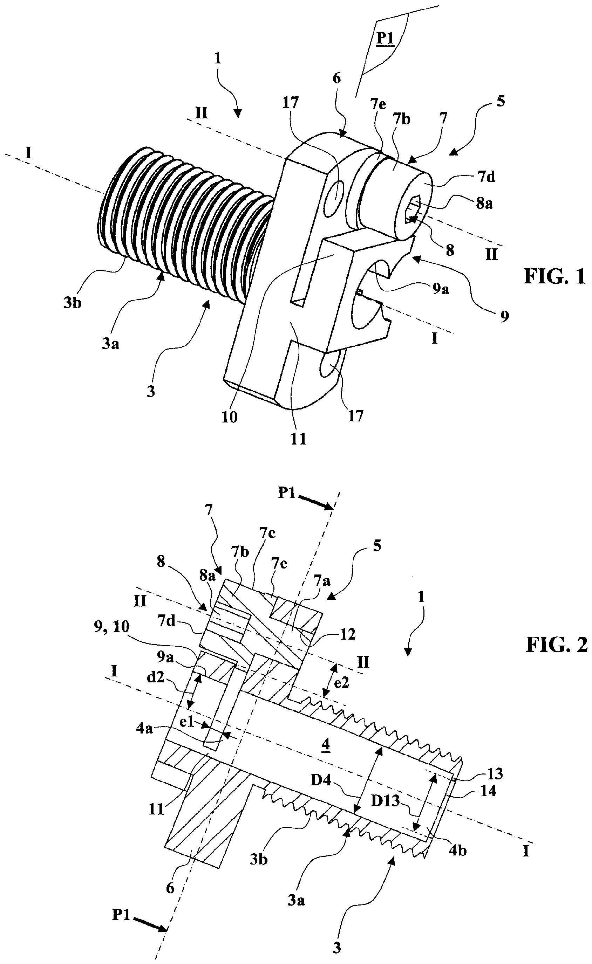

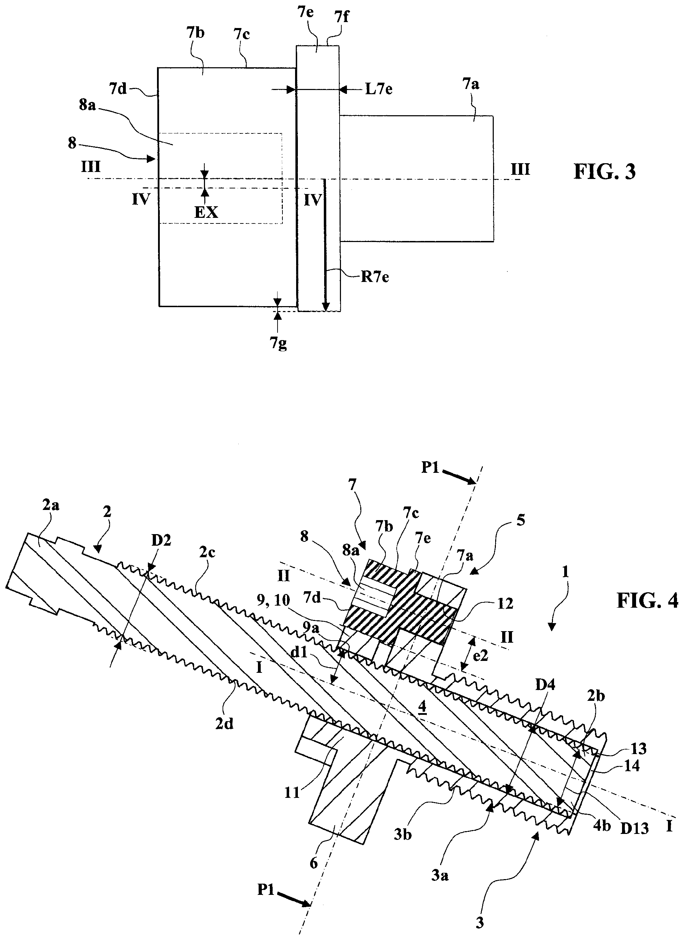

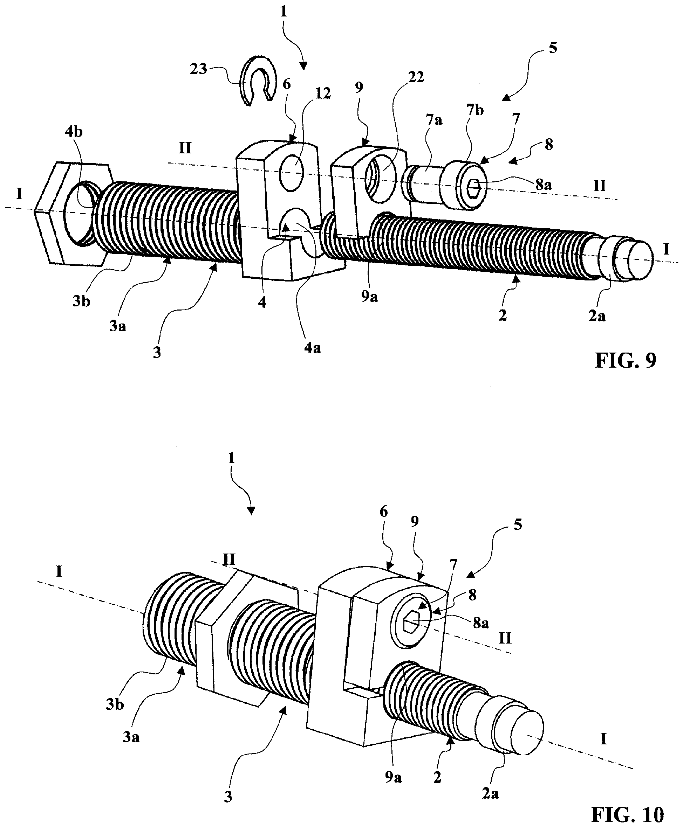

Sur les figures 1 à 8 et 13 d'une part et sur les figures 9 à 12 d'autre part sont respectivement illustrés un premier mode de réalisation et un deuxième mode de réalisation de dispositif de fixation 1 selon la présente invention, destiné à la tenue d'un capteur 2 ayant une forme cylindrique limitée par une extrémité proximale 2a et une extrémité distale 2b (figure 4).

Dans tous les modes de réalisation, le dispositif de fixation 1 comporte :
- un corps 3 comprenant un passage longitudinal traversant 4 s'allongeant selon un premier axe longitudinal I-I entre une première extrémité 4a et une deuxième extrémité 4b, ledit passage longitudinal traversant 4 étant destiné à recevoir ledit capteur 2,
- des moyens d'immobilisation axiale 5 du capteur 2 dans le passage longitudinal traversant 4.

De façon plus détaillée, les moyens d'immobilisation axiale 5 comprennent :
- un flasque 6, solidaire du corps 3, s'épanouissant radialement depuis et à l'écart du corps 3 et du premier axe longitudinal I-I,
- une came 7 montée rotative sur le flasque 6 autour d'un deuxième axe longitudinal II-II parallèle au premier axe longitudinal I-I et décalé radialement à l'écart du premier axe longitudinal I-I,
- des moyens d'entraînement 8 en rotation de la came 7 autour du deuxième axe longitudinal II-II,
- une pièce de serrage 9, fixe selon le premier axe longitudinal I-I par rapport au corps 3, comportant une surface de serrage 9a destinée à venir au contact de la surface extérieure 2c (surface latérale sensiblement cylindrique, éventuellement filetée) du capteur 2, la pièce de serrage 9 étant sollicitée par la came 7 pour être déplaçable radialement (dans un plan transversal P1) entre au moins :
   ∘ une position de serrage (figure 4) dans laquelle la surface de serrage 9a est distante du premier axe longitudinal I-I selon une première distance d1,
   ∘ une position de libération (figure 2) dans laquelle la surface de serrage 9a est distante du premier axe longitudinal I-I selon une deuxième distance d2, la deuxième distance d2 étant supérieure à la première distance d1.

Dans le premier mode de réalisation, la pièce de serrage 9 est formée d'une seule pièce avec le flasque 6.

Plus spécifiquement, comme on peut le voir sur les figures 1 et 2, la pièce de serrage 9 comprend un bras 10 comportant la surface de serrage 9a. Le bras 10 est relié au flasque 6 par une entretoise 11 qui tient le bras 10 à l'écart du flasque 6 selon le premier axe longitudinal I-I (écart e1).

Le bras 10 est apte à pivoter dans le plan transversal P1 par déformation élastique d'au moins une partie de la matière constitutive du bras 10 et/ou au moins une partie de la matière constitutive de l'entretoise 11.

Lorsque le bras 10 n'est pas sollicité par la came 7, il est rappelé élastiquement en position de libération. La pièce de serrage 9 (bras 10) a ainsi une position de libération qui est une position stable, et dans laquelle la pièce de serrage 9 est située hors du prolongement de la section transversale du passage longitudinal traversant 4 pour ne pas gêner l'introduction du capteur 2 dans le passage longitudinal traversant 4 ou le retrait du capteur 2 hors du passage longitudinal traversant 4.

La came 7 est plus particulièrement visible sur la figure 3. Celle-ci est un pion à excentrique comportant :
- un premier tronçon cylindrique 7a à section transversale circulaire s'étendant selon un troisième axe longitudinal III-III, destiné à être reçu rotativement dans un trou 12 (figures 2 et 4) ménagé dans le flasque 6 selon le deuxième axe longitudinal II-II,
- un deuxième tronçon cylindrique 7b à section transversale circulaire s'étendant selon un quatrième axe longitudinal IV-IV décalé radialement à l'écart du troisième axe longitudinal III-III, ledit deuxième tronçon cylindrique 7b étant muni d'une surface latérale 7c destinée à venir en appui contre la pièce de serrage 9 pour solliciter la pièce de serrage 9 en déplacement depuis une position de libération (figure 2) vers une position de serrage (figure 4).

Le deuxième tronçon cylindrique 7b peut présenter une section transversale non circulaire, par exemple ovale ou polygonale, s'allongeant selon un quatrième axe longitudinal IV-IV qui peut être centré ou décentré par rapport au troisième axe longitudinal III-III.

Dans la réalisation illustrée sur la figure 3, la surface latérale cylindrique 7c du deuxième tronçon cylindrique 7b est lisse. En alternative, cette surface latérale cylindrique 7c peut être munie de reliefs, par exemple des reliefs constitués par un moletage.

Le décalage entre le troisième axe longitudinal III-III et le quatrième axe longitudinal IV-IV correspond à l'excentricité EX du deuxième tronçon cylindrique 7b par rapport au premier tronçon cylindrique 7a.

On voit sur la figure 1 que les moyens d'entraînement 8 en rotation du pion à excentrique 7 (came) comprennent une empreinte 8a femelle à section transversale non circulaire, ladite empreinte 8a s'étendant parallèlement au premier axe longitudinal I-I. L'empreinte 8a est ici hexagonale, et s'étend en outre coaxialement au troisième axe longitudinal III-III.

En alternative à une empreinte 8a femelle, on peut recourir à une empreinte « mâle », c'est-à-dire une empreinte faisant saillie depuis et à l'écart d'une face frontale d'extrémité 7d du deuxième tronçon cylindrique 7b selon le troisième axe longitudinal III-III.

Dans les deux alternatives d'empreinte 8a femelle ou d'empreinte mâle, les empreintes sont accessibles selon la face frontale d'extrémité 7d de la came 7, ladite face frontale d'extrémité 7d étant sensiblement perpendiculaire au premier axe longitudinal I-I, pour solliciter en rotation la came 7.

Sur la figure 3, la came (pion à excentrique) 7 comporte en outre un tronçon intermédiaire 7e cylindrique à section transversale circulaire s'étendant selon le troisième axe longitudinal III-III (et donc coaxial au premier tronçon cylindrique 7a). Le tronçon intermédiaire 7e cylindrique présente un rayon R7e extérieur légèrement supérieur à l'écart e2 radial entre le deuxième axe longitudinal II-II et le bras 10 (lorsque le bras 10 est en position de libération, figure 2). Le tronçon intermédiaire 7e cylindrique présente une longueur axiale L7e inférieure ou égale à l'écart e1 entre le bras 10 et le flasque 6 (figures 2 et 4). Enfin, malgré son excentricité, le deuxième tronçon cylindrique 7b est toujours situé en retrait du bord latéral périphérique 7f du tronçon intermédiaire 7e cylindrique selon un retrait radial minimal 7g. Le tronçon intermédiaire 7e cylindrique et le bras 10 coopèrent ainsi pour retenir captif le pion à excentrique 7 (came) sur le flasque 6 par engagement du premier tronçon cylindrique 7a dans le trou 12.

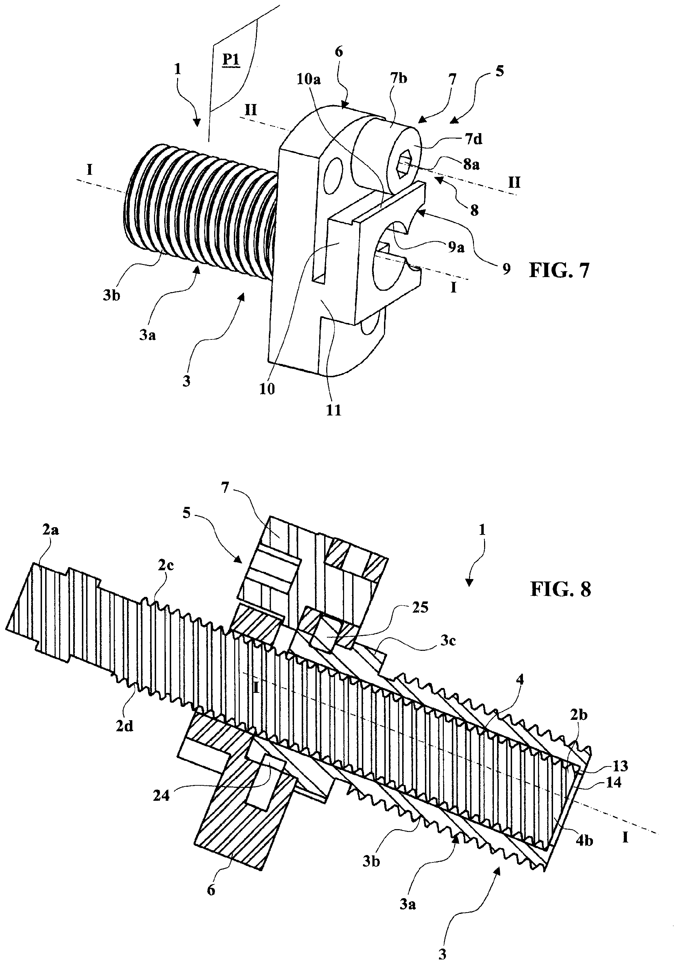

En alternative, on pourra recourir à la variante illustrée sur la figure 7, dans laquelle le pion à excentrique 7 (came) est dépourvu de tronçon intermédiaire 7e. Le bras 10 est quant à lui pourvu d'une nervure 10a s'étendant parallèlement au plan transversal P1 et en direction du deuxième axe longitudinal II-II. La nervure 10a vient en permanence (dans toutes les positions de libération et toutes les positions de serrage) à recouvrement partiel de la face frontale d'extrémité 7d du deuxième tronçon cylindrique 7b. La nervure 10a forme ainsi une butée s'opposant à un déplacement axial relatif (selon le deuxième axe longitudinal II-II) du pion à excentrique 7 (came) à l'écart du flasque 6. La face frontale d'extrémité 7d et la nervure 10a du bras 10 coopèrent ainsi pour retenir captif le pion à excentrique 7 (came) sur le flasque 6 par engagement du premier tronçon cylindrique 7a dans le trou 12.

Ainsi, que ce soit dans le cadre de la variante illustrée sur les figures 1 à 6 ou dans le cadre de la variante illustrée sur la figure 7, le bras 10 retient captif, selon le deuxième axe longitudinal II-II, le pion à excentrique 7 (came) monté rotatif dans le trou 12 du flasque 6. Le nombre de pièces constitutives s'en trouve réduit, et l'assemblage est simplifié.

On voit plus particulièrement sur les figures 2 et 4 que le passage longitudinal traversant 4 est lisse et permet de recevoir à coulissement libre le capteur 2 (le passage longitudinal traversant 4 présentant un diamètre intérieur D4 légèrement supérieur au diamètre extérieur D2 du capteur 2). La surface extérieure 2c du capteur 2 peut dans ce cas être lisse, contrairement à ce qui est illustré sur les figures.

En alternative, le corps 3 peut comporter un filetage intérieur sur au moins une partie de sa longueur (sur une partie de la longueur du passage longitudinal traversant 4) et/ou la surface de serrage 9a comporte un filetage, ledit filetage (intérieur dans le cas du corps 3) étant destiné à coopérer avec un filetage extérieur 2d prévu sur la surface extérieure 2c du capteur 2.

Sur ces mêmes figures 2 et 4, on voit que, à la deuxième extrémité 4b du passage longitudinal traversant 4, un épanouissement 13 s'étend radialement vers l'intérieur et définit un orifice 14 à section transversale ayant au moins une dimension inférieure aux dimensions de la section transversale du capteur. Ici, l'épanouissement 13 est annulaire : il se présente ainsi sous la forme d'une couronne ayant diamètre extérieur égal au diamètre intérieur D4 du passage longitudinal traversant 4 et un diamètre intérieur D13 inférieur au diamètre extérieur D2 du capteur 2. L'épanouissement 13 forme ainsi une butée permettant de conserver l'extrémité distale 2b du capteur 2 à l'intérieur du passage longitudinal traversant 4 du corps 3 afin de la protéger et/ou la disposer en une position axiale prédéterminée précise.

Si confiner l'extrémité distale 2b du capteur 2 à l'intérieur du passage longitudinal traversant 4 du corps 3 n'est pas souhaitable ou pas nécessaire, la deuxième extrémité 4b du passage longitudinal traversant 4 peut en alternative être dépourvue d'épanouissement 13.

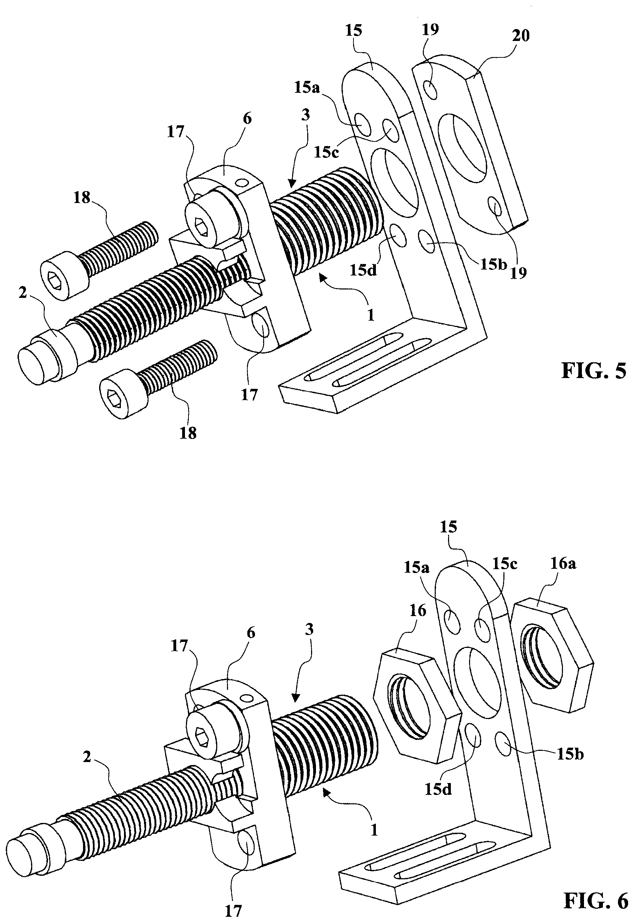

Sur les figures 1 à 12, le corps 3 comporte un tronçon tubulaire 3a ayant un filetage extérieur 3b sur au moins une partie de sa longueur (en l'occurrence sur la totalité de sa longueur ici). Le filetage extérieur 3b permet par exemple de monter le dispositif de fixation 1 dans un support tel qu'une équerre 15 illustrée sur la figure 6 à l'aide d'un écrou 16 et d'un contre-écrou 16a. L'équerre 15 est quant à elle solidaire (de façon inséparable ou amovible) de la machine-outils ou de la chaîne automatisée de fabrication.

Dans la variante illustrée sur la figure 8, le flasque 6 est solidaire du corps 3 en étant monté rotatif par rapport au corps 3 autour du premier axe longitudinal I-I. Pour ce faire, le corps 3 comporte une gorge 24 circulaire dans laquelle est engagé un pion de retenue axiale 25 qui est simultanément en prise dans le flasque 6. Le corps 3 comporte un tronçon d'entraînement 3c à section transversale non circulaire (hexagonale par exemple). Le corps 3 peut ainsi être entraîné en rotation par rapport au flasque 6 pour être vissé (dans un support ou un bâti de machine par exemple) tout en conservant une orientation fixe du flasque 6.

Un montage alternatif à celui de la figure 6 est illustré sur la figure 5. Le flasque 6 est pourvu de deux trous traversants 17 pour le passage de vis 18 destinées à venir se visser dans deux trous filetés 19 d'un flasque secondaire 20. L'équerre 15 est alors prise en sandwich entre le flasque 6 et le flasque secondaire 20. On peut toutefois se passer du flasque secondaire 20 si les trous 15a et 15b ou 15c et 15d sont filetés de façon à recevoir les vis 18 par vissage.

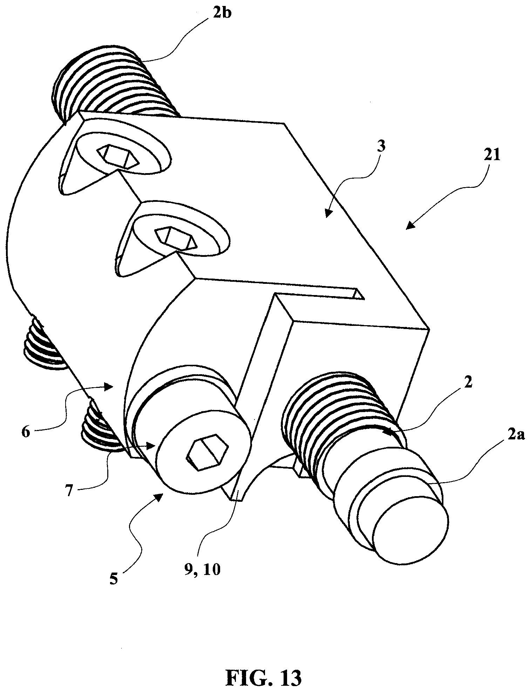

Sur la figure 13 est illustrée une autre variante de dispositif de fixation 1, dans laquelle le corps 3 et le flasque 6 sont formés d'une seule pièce selon un ensemble 21 à forme sensiblement parallélépipédique.

Dans le deuxième mode de réalisation, illustré sur les figures 9 à 12, la pièce de serrage 9 est constituée d'une pièce distincte du flasque 6. Les références numériques utilisées dans le cadre de la description du premier mode de réalisation désignent des éléments identiques ou équivalents dans le deuxième mode de réalisation.

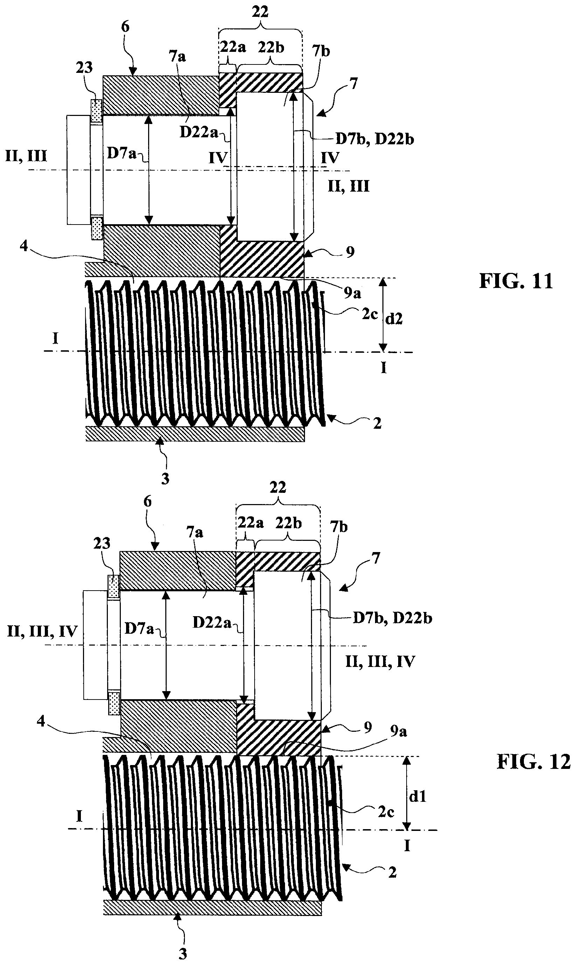

La pièce de serrage 9 comporte un passage traversant 22 qui est plus particulièrement visible sur les figures 11 et 12. Le passage traversant 22 est constitué par un premier tronçon de passage traversant 22a prolongé par un deuxième tronçon de passage traversant 22b, le premier tronçon de passage traversant 22a présentant une section transversale (circulaire ici) de dimensions (diamètre D22a ici) plus réduites que celles (diamètre D22b ici) du deuxième tronçon de passage traversant 22b.

Le premier tronçon de passage traversant 22a a une section transversale circulaire de diamètre D22a supérieur au diamètre D7a de la section transversale du premier tronçon cylindrique 7a du pion à excentrique 7. Le deuxième tronçon de passage traversant 22b a une section transversale circulaire complémentaire de la forme (circulaire ici) de la section transversale du deuxième tronçon cylindrique 7b du pion à excentrique 7 : en pratique, le diamètre D22b est peu supérieur ou égal au diamètre D7b du deuxième tronçon cylindrique 7b.

Le pion à excentrique 7 et la pièce de serrage 9 sont rendus solidaires du flasque 6 au moyen d'un circlips 23.

De façon avantageuse, le décalage radial (excentricité EX) entre le quatrième axe longitudinal IV-IV et le troisième axe longitudinal III-III (figure 3) est supérieur à la différence entre le diamètre D22a du premier tronçon de passage traversant 22a de la pièce de serrage 9 et le diamètre D7a du premier tronçon cylindrique 7a du pion à excentrique 7.

Partant de la position de serrage illustrée sur la figure 12, l'opérateur peut entraîner en rotation le pion à excentrique 7 autour du deuxième axe longitudinal II-II : l'excentricité du deuxième tronçon cylindrique 7b provoque alors un déplacement de la pièce de serrage 9 à l'écart du premier axe longitudinal I-I de façon à libérer le capteur 2. L'excentricité EX (décalage radial entre le quatrième axe longitudinal IV-IV et le troisième axe longitudinal III-III) étant supérieure à la différence entre le diamètre D22a du premier tronçon de passage traversant 22a de la pièce de serrage 9 et le diamètre D7a du premier tronçon cylindrique 7a du pion à excentrique 7, la partie inférieure (sur la figure 11) du premier tronçon de passage traversant 22a vient en moins d'un demi-tour en butée contre le premier tronçon cylindrique 7a en une position de libération (figure 11) qui est stable.

Ainsi, le dimensionnement explicité ci-dessus permet au pion à excentrique 7 d'immobiliser la pièce de serrage 9 par rapport au flasque 6 en une position de libération (figure 11) qui est stable. Une telle position permet à l'opérateur, après avoir immobilisé la pièce de serrage 9 par rapport au flasque 6 en position de libération, de pouvoir insérer ou retirer le capteur 2 dans le passage longitudinal traversant 4 sans risque de conflit avec la pièce de serrage (la pièce de serrage étant située hors du prolongement de la section transversale du passage longitudinal traversant 4).

Lors de l'utilisation du dispositif de fixation 1 selon l'invention, l'opérateur actionne en rotation la came (pion à excentrique) 7 en agissant sur l'empreinte 8a femelle (ou sur l'empreinte mâle) qui est accessible selon la face frontale d'extrémité 7d de la came 7, de façon à déplacer la pièce de serrage 9 entre sa position de libération (surface de serrage 9a située à la deuxième distance d2 du premier axe longitudinal I-I) et sa position de serrage. Pour ce faire, l'opérateur utilise un outil de vissage (tel qu'un tournevis qui présente un faible encombrement radial) apte à coopérer avec l'empreinte 8a femelle (ou mâle) des moyens d'entraînement 8.

Dans le cadre du premier mode de réalisation (figures 1 à 8 et 13), la pièce de serrage 9 (bras 10) revient élastiquement en position de libération (figure 2). Dans le cadre du deuxième mode de réalisation (figures 9 à 12), l'opérateur fait de préférence tourner la came (pion à excentrique) 7 jusqu'à ce que la partie inférieure du premier tronçon de passage traversant 22a vienne en butée contre le premier tronçon cylindrique 7a (figure 11). Dans les deux modes de réalisation, la pièce de serrage 9 est alors en position stable et se trouve hors du prolongement du passage longitudinal traversant 4 qui est ainsi libre et dégagé pour une introduction sans gêne du capteur 2.

L'opérateur introduit alors le capteur 2 dans le passage longitudinal traversant 4 jusqu'à la position longitudinale souhaitée selon le premier axe longitudinal I-I (par exemple jusqu'à ce que l'extrémité distale 2b du capteur 2 vienne en butée contre l'épanouissement 13).

En agissant sur l'empreinte 8a femelle (ou sur l'empreinte mâle), l'opérateur met ensuite la came (pion à excentrique) 7 en rotation autour du deuxième axe longitudinal II-II, dont le deuxième tronçon cylindrique 7b sollicite la pièce de serrage 9 pour déplacer cette dernière en une position de serrage (figures 4 et 12) dans laquelle la surface de serrage 9a vient presser la surface extérieure 2c du capteur 2 (surface de serrage 9a située à la première distance d1 du premier axe longitudinal I-I). Dans le premier mode de réalisation, cela s'opère par pivotement du bras 10 dans le plan transversal P1 par déformation élastique d'au moins une partie du bras 10 et/ou de l'entretoise 11. Le capteur 2 est alors immobilisé dans le passage longitudinal traversant 4 selon le premier axe longitudinal I-I.

Pour retirer le capteur 2 hors du passage longitudinal traversant 4, l'opérateur effectue les opérations précitées dans l'ordre inverse.

La présente invention n'est pas limitée aux modes de réalisation qui ont été explicitement décrits, mais elle en inclut les diverses variantes et généralisations contenues dans le domaine des revendications ci-après.

## Revendications

1. - Dispositif de fixation (1) pour la tenue d'un capteur (2) ayant une forme cylindrique limitée par une extrémité proximale (2a) et une extrémité distale (2b), le dispositif de fixation (1) comportant :
- un corps (3) comprenant un passage longitudinal traversant (4) s'allongeant selon un premier axe longitudinal (I-I) entre une première extrémité (4a) et une deuxième extrémité (4b), ledit passage longitudinal traversant (4) étant destiné à recevoir ledit capteur (2),
- des moyens d'immobilisation axiale (5) du capteur (2) dans le passage longitudinal traversant (4),
**caractérisé en ce que** les moyens d'immobilisation axiale (5) comprennent :
- un flasque (6), solidaire du corps (3), s'épanouissant radialement depuis et à l'écart du corps (3) et du premier axe longitudinal (I-I),
- une came (7) montée rotative sur le flasque (6) autour d'un deuxième axe longitudinal (II-II) parallèle au premier axe longitudinal (I-I) et décalé radialement à l'écart du premier axe longitudinal (I-I),
- des moyens d'entraînement (8) en rotation de la came (7) autour du deuxième axe longitudinal (II-II),
- une pièce de serrage (9), fixe selon le premier axe longitudinal (I-I) par rapport au corps (3), comportant une surface de serrage (9a) destinée à venir au contact de la surface extérieure du capteur (2c), sollicitée par la came (7) pour être déplaçable radialement entre au moins :
∘ une position de serrage dans laquelle la surface de serrage (9a) est distante du premier axe longitudinal (I-I) selon une première distance (d1),
o une position de libération dans laquelle la surface de serrage (9a) est distante du premier axe longitudinal (I-I) selon une deuxième distance (d2), la deuxième distance (d2) étant supérieure à la première distance (d1).

2. - Dispositif de fixation (1) selon la revendication 1, **caractérisé en ce que** le corps (3) comporte un filetage intérieur sur au moins une partie de sa longueur et/ou la surface de serrage (9a) comporte un filetage destiné à coopérer avec un filetage extérieur (2d) prévu sur la surface extérieure (2c) du capteur (2).

3. - Dispositif de fixation (1) selon l'une des revendications 1 ou 2, **caractérisé en ce que** les moyens d'entraînement (8) en rotation de la came (7) comprennent une empreinte (8a) mâle ou femelle à section transversale non circulaire, ladite empreinte (8a) s'étendant parallèlement au premier axe longitudinal (I-I), ladite empreinte (8a) étant de préférence accessible selon une face frontale d'extrémité (7d) de la came (7) qui est sensiblement perpendiculaire au premier axe longitudinal (I-I).

4. - Dispositif de fixation (1) selon l'une quelconque des revendications 1 à 3, **caractérisé en ce que**, à la deuxième extrémité (4b) du passage longitudinal traversant (4), un épanouissement (13) s'étend radialement vers l'intérieur et définit un orifice (14) à section transversale de dimensions (D13) inférieures aux dimensions (D2) de la section transversale du capteur (2).

5. - Dispositif de fixation (1) selon l'une quelconque des revendications 1 à 4, **caractérisé en ce que** la came est un pion à excentrique (7) comportant :
- un premier tronçon cylindrique (7a) à section transversale circulaire s'étendant selon un troisième axe longitudinal (III-III), destiné à être reçu rotativement dans un trou (12) ménagé dans le flasque (6) selon le deuxième axe longitudinal (II-II),
- un deuxième tronçon cylindrique (7b) à section transversale circulaire s'étendant selon un quatrième axe longitudinal (IV-IV) décalé radialement à l'écart du troisième axe longitudinal (III-III), ledit deuxième tronçon cylindrique (7b) étant muni d'une surface latérale (7c) destinée à venir en appui contre la pièce de serrage (9) pour solliciter la pièce de serrage (9) en déplacement depuis une position de libération vers une position de serrage.

6. - Dispositif de fixation (1) selon la revendication 5, **caractérisé en ce que** la surface latérale cylindrique (7c) du deuxième tronçon cylindrique (7b) est munie de reliefs, les reliefs étant de préférence constitués par un moletage.

7. - Dispositif de fixation (1) selon l'une quelconque des revendications 1 à 6, **caractérisé en ce que** la pièce de serrage (9) est formée d'une seule pièce avec le flasque (6).

8. - Dispositif de fixation (1) selon la revendication 7, **caractérisé en ce que** :
- la pièce de serrage (9) comprend un bras (10) comportant la surface de serrage (9a),
- ledit bras (10) est relié au flasque (6) par une entretoise (11) qui tient le bras (10) à l'écart du flasque (6) selon le premier axe longitudinal (I-I),
- ledit bras (10) est apte à pivoter dans un plan transversal (P1) par déformation élastique d'au moins une partie du bras (10) et/ou de l'entretoise (11).

9. - Dispositif de fixation (1) selon la revendication 8, **caractérisé en ce que** le bras (10) retient captive selon le deuxième axe longitudinal (II-II) la came (7) montée rotative dans un trou (12) du flasque (6).

10. - Dispositif de fixation (1) selon l'une quelconque des revendications 1 à 6, **caractérisé en ce que** la pièce de serrage (9) est constituée d'une pièce distincte du flasque (6).

11. - Dispositif de fixation (1) selon la revendication 10, **caractérisé en ce que**, en position de libération, la came (7) immobilise la pièce de serrage (9) par rapport au flasque (6).

12. - Dispositif de fixation (1) selon l'une des revendications 10 ou 11, prises dans leur dépendance de l'une des revendications 5 ou 6, **caractérisé en ce que** :
- la pièce de serrage (9) comporte un passage traversant (22) constitué par un premier tronçon de passage traversant (22a) prolongé par un deuxième tronçon de passage traversant (22b), le premier tronçon de passage traversant (22a) présentant une section transversale de dimensions plus réduites que celles du deuxième tronçon de passage traversant (22b),
- le premier tronçon de passage traversant (22a) a une section transversale circulaire de diamètre (D22a) supérieur au diamètre (D7a) de la section transversale du premier tronçon cylindrique (7a) du pion à excentrique (7),
- le deuxième tronçon de passage traversant (22b) a une section transversale circulaire complémentaire de la forme de la section transversale du deuxième tronçon cylindrique (7b) du pion à excentrique (7).

13. - Dispositif de fixation (1) selon la revendication 12, **caractérisé en ce que** le décalage radial (EX) entre le quatrième axe longitudinal (IV-IV) et le troisième axe longitudinal (III-III) est supérieur à la différence entre le diamètre (D22a) du premier tronçon de passage traversant (22a) de la pièce de serrage (9) et le diamètre (D7a) du premier tronçon cylindrique (7a) du pion à excentrique (7).

14. - Dispositif de fixation (1) selon l'une quelconque des revendications 1 à 13, **caractérisé en ce que** le corps (3) comporte un tronçon tubulaire (3a) ayant un filetage extérieur (3b) sur au moins une partie de sa longueur.

15. - Dispositif de fixation (1) selon la revendication 14, **caractérisé en ce que** :
- le flasque (6) est solidaire du corps (3) en étant monté rotatif par rapport au corps (3) autour du premier axe longitudinal (I-I),
- le corps (3) comporte un tronçon d'entraînement (3c) à section transversale non circulaire.

16. - Dispositif de fixation (1) selon l'une quelconque des revendications 1 à 13, **caractérisé en ce que** le corps (3) et le flasque (6) sont formés d'une seule pièce selon un ensemble (21) à forme sensiblement parallélépipédique.

## Patentansprüche

1. Befestigungsvorrichtung (1) zum Halten eines Sensors (2) mit einer zylindrischen Form, die durch ein proximales Ende (2a) und ein distales Ende (2b) begrenzt ist, wobei die Befestigungsvorrichtung (1) umfasst:
- einen Körper (3), der eine Längs-Durchgangspassage (4) umfasst, die sich entlang einer ersten Längsachse (I-I) zwischen einem ersten Ende (4a) und einem zweiten Ende (4b) erstreckt, wobei die Längs-Durchgangspassage (4) dazu bestimmt ist, den Sensor (2) aufzunehmen,
- Mittel zur axialen zur Immobilisierung (5) des Sensors (2) in der Längs-Durchgangspassage (4),
**dadurch gekennzeichnet, dass**
die Mittel zur axialen Immobilisierung (5) umfassen:
- einen Flansch (6), der fest mit dem Körper (3) verbunden ist und sich radial von und weg von dem Körper (3) und der ersten Längsachse (I-I) ausdehnt,
- einen Nocken (7), der am Flansch (6) um eine zweite Längsachse (II-II) parallel zur ersten Längsachse (I-I) drehbar montiert und radial von der ersten Längsachse (I-I) weg versetzt ist,
- Antriebsmittel (8) zur Drehung des Nockens (7) um die zweite Längsachse (II-II)
- ein Klemmstück (9), das längs der ersten Längsachse (I-I) relativ zum ersten Körper (3) fixiert ist und eine Klemmfläche (9a) aufweist, die dazu bestimmt ist, mit der Außenfläche des Sensors (2c) in Kontakt zu kommen, und von dem Nocken (7) beaufschlagt ist, radial verstellbar zu sein zwischen wenigstens:
o einer Klemmposition, in der die Klemmfläche (9a) von der von der ersten Längsachse (I-I) um einen ersten Abstand (d1) entfernt ist,
∘ eine Freigabeposition, in der die Klemmfläche (9a) von der ersten Längsachse ( I-I) um einen zweiten Abstand (d2) entfernt ist, wobei der zweite Abstand (d2) größer als der erste Abstand (d1) ist.

2. Befestigungsvorrichtung (1) nach Anspruch 1, **dadurch gekennzeichnet, dass** der Körper (3) ein Innengewinde über mindestens einen Teil seiner Länge aufweist, und/oder die Klemmfläche (9a) ein Gewinde aufweist, das dazu bestimmt ist, mit einem Außengewinde (2d) zusammenzuwirken, das auf der Außenfläche (2c) des Sensors (2) vorgesehen ist.

3. Befestigungsvorrichtung (1) nach einem der Ansprüche 1 oder 2, **dadurch gekennzeichnet, dass** die Antriebsmittel (8) zur Drehung des Nockens (7) einen Vorsprung oder eine Vertiefung (8a) mit einem nicht kreisförmigen Querschnitt umfassen, wobei der Vorsprung oder die Vertiefung (8a) parallel zur ersten Längsachse (I-I) verlaufen, und der Vorsprung oder die Vertiefung (8a) vorzugsweise an einer vorderen Stirnfläche (7d) des Nockens (7) zugänglich sind, die im wesentlichen senkrecht zur ersten Längsachse (I-I) verläuft.

4. Befestigungsvorrichtung (1) nach einem der Ansprüche 1 bis 3, **dadurch gekennzeichnet, dass** sich am zweiten Ende (4b) der Längs-Durchgangspassage (4) eine Ausformung (13) radial nach innen erstreckt und eine Öffnung definiert (14) mit einem Querschnitt mit Abmessungen (D13) kleiner als die Abmessungen (D2) des Querschnitts des Sensors (2).

5. Befestigungsvorrichtung (1) nach einem der Ansprüche 1 bis 4, **dadurch gekennzeichnet, dass** der Nocken ein Exzenter-Bolzen bzw. -Pion (7) ist, umfassend:
- einen ersten zylindrischen Abschnitt (7a) mit kreisförmigem Querschnitt, der sich entlang einer dritten Längsachse (III-III) erstreckt und dazu bestimmt ist, drehbar in einem Loch (12) aufgenommen zu werden, das in dem Flansch (6) entlang der zweiten Längsachse (II-II) ausgebildet ist,
- einen zweiten zylindrischen Abschnitt (7b) mit kreisförmigem Querschnitt, der sich entlang einer vierten Längsachse (IV-IV) erstreckt, die radial von der dritten Längsachse (III-III) weg versetzt ist, wobei der zweite zylindrische Abschnitt (7b) eine Seitenfläche (7c) aufweist, die dazu bestimmt ist, gegen das Klemmstück (9) zu drücken, um das Klemmstück (9) dazu zu veranlassen, sich von einer Freigabeposition in eine Klemmposition zu bewegen.

6. Befestigungsvorrichtung (1) nach Anspruch 5, **dadurch gekennzeichnet, dass** die zylindrische Seitenfläche (7c) des zweiten zylindrischen Abschnitts (7b) mit Reliefs versehen ist, wobei die Reliefs vorzugsweise durch eine Rändelung gebildet sind.

7. Befestigungsvorrichtung (1) nach einem der Ansprüche 1 bis 6, **dadurch gekennzeichnet, dass** das Klemmstück (9) aus einem Stück mit dem Flansch (6) ausgebildet ist.

8. Befestigungsvorrichtung (1) nach Anspruch 7, **dadurch gekennzeichnet, dass**:
- das Klemmstück (9) einen die Klemmfläche (9a) aufweisenden Arm (10) aufweist,
- der Arm (10) mit dem Flansch (6) durch einen Abstandshalter (11) verbunden ist, der den Arm (10) von dem Flansch (6) entlang der ersten Längsachse (I-I) entfernt hält,
- der Arm (10) in einer Querebene (P1) durch elastische Verformung mindestens eines Teils des Arms (10) und/oder des Abstandshalters (11) schwenken kann.

9. Befestigungsvorrichtung (1) nach Anspruch 8, **dadurch gekennzeichnet, dass** der Arm (10) den in einem Loch (12) des Flansches (6) drehbar gelagerten Nocken (7) entlang der zweiten Längsachse (II-II) unverlierbar hält.

10. Befestigungsvorrichtung (1) nach einem der Ansprüche 1 bis 6, **dadurch gekennzeichnet, dass** das Klemmstück (9) aus einem Teil separat vom Flansch (6) besteht.

11. Befestigungsvorrichtung (1) nach Anspruch 10, **dadurch gekennzeichnet, dass** der Nocken (7) in der Freigabeposition das Klemmstück (9) relativ zum Flansch (6) festlegt.

12. Befestigungsvorrichtung (1) nach einem der Ansprüche 10 oder 11, soweit abhängig von einem der Ansprüche 5 oder 6, **dadurch gekennzeichnet, dass**:
- das Klemmstück (9) aufweist eine Durchgangspassage (22) bestehend aus einem ersten Durchgangspassagenabschnitt (22a), verlängert durch einen zweiten Durchgangspassagenabschnitt (22b), wobei der erste Durchgangspassagenabschnitt (22a) einen Querschnitt aufweist mit kleineren Abmessungen als die des zweiten Durchgangspassagenabschnitts (22b),
- der erste Durchgangspassagenabschnitt (22a) einen kreisförmigen Querschnitt mit einem Durchmesser (D22a) aufweist, der größer ist als der Durchmesser (D7a) des Querschnitts des ersten zylindrischen Abschnitts (7a) des Exzenter-Bolzens bzw. -Pions (7),
- der zweite Durchgangspassagenabschnitt (22b) einen kreisförmigen Querschnitt aufweist, der komplementär zur Form des Querschnitts des zweiten zylindrischen Abschnitts (7b) des Exzenter-Bolzens bzw. -Pions (7) ist.

13. Befestigungsvorrichtung (1) nach Anspruch 12, **dadurch gekennzeichnet, dass** der radiale Versatz (EX) zwischen der vierten Längsachse (IV-IV) und der dritten Längsachse (III-III) größer ist als die Differenz zwischen dem Durchmesser (D22a ) des ersten Durchgangspassagenabschnitts (22a) des Klemmstücks (9) und dem Durchmesser (D7a) des ersten zylindrischen Abschnitts (7a) des Exzenter-Bolzens bzw. -Pions (7).

14. Befestigungsvorrichtung (1) nach einem der Ansprüche 1 bis 13, **dadurch gekennzeichnet, dass** der Körper (3) einen rohrförmigen Abschnitt (3a) mit einem Außengewinde (3b) über zumindest einen Teil seiner Länge aufweist.

15. Befestigungsvorrichtung (1) nach Anspruch 14, **dadurch gekennzeichnet, dass**:
- der Flansch (6) fest mit dem Körper (3) verbunden ist und relativ zu dem Körper (3) um die erste Längsachse (I-I) drehbar montiert ist,
- der Körper (3) einen Antriebsabschnitt (3c) mit einem nicht kreisförmigen Querschnitt umfasst.

16. Befestigungsvorrichtung (1) nach einem der Ansprüche 1 bis 13, **dadurch gekennzeichnet, dass** der Körper (3) und der Flansch (6) aus einem Stück im Sinne einer Anordnung (21) von im Wesentlichen parallelepipedischer Gestalt ausgebildet sind.

## Claims

1. A fastening device (1) for holding a sensor (2) having a cylindrical shaped bounded by a proximal end (2a) and a distal end (2b), the fastening device (1) comprising:
- a body (3) comprising a longitudinal through-passage (4) extending along a first longitudinal axis (I-I) between a first end (4a) and a second end (4b), said longitudinal through-passage (4) being intended to accept said sensor (2),
- axial-immobilization means (5) for immobilizing the sensor (2) in the longitudinal through-passage (4),
**characterized in that** the axial-immobilization means (5) comprise:
- a flange (6), solid with the body (3), flaring out radially from and away from the body (3) and the first longitudinal axis (I-I),
- a cam (7) mounted with the ability to rotate on the flange (6) about a second longitudinal axis (II-II) parallel to the first longitudinal axis (I-I) and offset radially away from the first longitudinal axis (I-I),
- drive means (8) rotationally driving the cam (7) about the second longitudinal axis (II-II),
- a clamping piece (9) that is fixed along the first longitudinal axis (I-I) with respect to the body (3) and comprising a clamping surface (9a) intended to come into contact with the exterior surface of the sensor (2c), and urged by the cam (7) so as to be radially movable between at least:
o a clamping position in which the clamping surface (9a) is distant from the first longitudinal axis (I-I) by a first distance (d1),
o a release position in which the clamping surface (9a) is distant from the first longitudinal axis (I-I) by a second distance (d2), the second distance (d2) being greater than the first distance (d1).

2. The fastening device (1) as claimed in claim 1, **characterized in that** the body (3) comprises an interior screw thread over at least part of its length and/or the clamping surface (9a) comprises a screw thread intended to engage with an exterior screw thread (2d) provided on the exterior surface (2c) of the sensor (2).

3. The fastening device (1) as claimed in one of claims 1 and 2, **characterized in that** the drive means (8) for driving the rotation of the cam (7) comprise a male or female socket drive (8a) of non-circular cross section, said socket drive (8a) extending parallel to the first longitudinal axis (I-I), said socket drive (8a) preferably being accessible on a frontal end face (7d) of the cam (7), which face is substantially perpendicular to the first longitudinal axis (I-I).

4. The fastening device (1) as claimed in any one of claims 1 to 3, **characterized in that**, at the second end (4b) of the longitudinal through-passage (4), a flaring (13) extends radially inward and defines an orifice (14) having a cross section with dimensions (D13) smaller than the dimensions (D2) of the cross section of the sensor (2).

5. The fastening device (1) as claimed in any one of claims 1 to 4, **characterized in that** the cam is a pin-mounted eccentric (7) comprising:
- a first cylindrical portion (7a) of circular cross section extending along a third longitudinal axis (III-III), and intended to be housed for rotation in a hole (12) formed in the flange (6) along the second longitudinal axis (II-II),
- a second cylindrical portion (7b) of circular cross section extending along a fourth longitudinal axis (IV-IV) that is radially offset away from the third longitudinal axis (III-III), said second cylindrical portion (7b) being equipped with a lateral surface (7c) that is intended to come to bear against the clamping piece (9) in order to urge the clamping piece (9) to move from a release position to a clamping position.

6. The fastening device (1) as claimed in claim 5, **characterized in that** the cylindrical lateral surface (7c) of the second cylindrical portion (7b) is equipped with reliefs, the reliefs preferably consisting of knurling.

7. The fastening device (1) as claimed in any one of claims 1 to 6, **characterized in that** the clamping piece (9) is formed of one piece with the flange (6).

8. The fastening device (1) as claimed in claim 7, **characterized in that**:
- the clamping piece (9) comprises an arm (10) comprising the clamping surface (9a),
- said arm (10) is connected to the flange (6) by a spacer piece (11) which holds the arm (10) away from the flange (6) along the first longitudinal axis (I-I),
- said arm (10) is able to pivot in a transverse plane (P1) by elastic deformation of at least part of the arm (10) and/or of the spacer piece (11).

9. The fastening device (1) as claimed in claim 8, **characterized in that** the arm (10) holds captive along the second longitudinal axis (II-II) the cam (7) mounted with the ability to rotate in a hole (12) in the flange (6).

10. The fastening device (1) as claimed in any one of claims 1 to 6, **characterized in that** the clamping piece (9) consists of a component separate from the flange (6).

11. The fastening device (1) as claimed in claim 10, **characterized in that**, in the release position, the cam (7) immobilizes the clamping piece (9) with respect to the flange (6).

12. The fastening device (1) as claimed in one of claims 10 and 11, considered in their dependency on one of claims 5 and 6, **characterized in that**:
- the clamping piece (9) comprises a through-passage (22) consisting of a first through-passage portion (22a) extended by a second through-passage portion (22b), the first through-passage portion (22a) having a cross section of dimensions smaller than those of the second through-passage portion (22b),
- the first through-passage portion (22a) has a circular cross section of diameter (D22a) greater than the diameter (D7a) of the cross section of the first cylindrical portion (7a) of the pin-mounted eccentric (7),
- the second through-passage portion (22b) has a circular cross section that complements the shape of the cross section of the second cylindrical portion (7b) of the pin-mounted eccentric (7).

13. The fastening device (1) as claimed in claim 12, **characterized in that** the radial offset (EX) between the fourth longitudinal axis (IV-IV) and the third longitudinal axis (III-III) is greater than the difference between the diameter (D22a) of the first through-passage portion (22a) of the clamping piece (9) and the diameter (D7a) of the first cylindrical portion (7a) of the pin-mounted eccentric (7).

14. The fastening device (1) as claimed in any one of claims 1 to 13, **characterized in that** the body (3) comprises a tubular portion (3a) having an exterior screw thread (3b) over at least part of its length.

15. The fastening device (1) as claimed in claim 14, **characterized in that**:
- the flange (6) is solid with the body (3) while being mounted with the ability to rotate with respect to the body (3) about the first longitudinal axis (I-I),
- the body (3) comprises a drive portion (3c) of non-circular cross section.

16. The fastening device (1) as claimed in any one of claims 1 to 13, **characterized in that** the body (3) and the flange (6) are formed in a single piece as an assembly (21) of substantially parallelepipedal shape.
